# EUROPEAN PATENT APPLICATION

(11) **EP 0 726 533 A2**
(43) Date of publication of application: **14.08.1996**
(21) Application number: 96101350.5
(22) Date of filing: 31.01.1996
(51) Int. Cl.: G06F 17/21, B41J 3/407

(54) **Text processing device with layout display mode**

(30) Priority: 31.01.1995 JP 36205/95
(71) Applicant: BROTHER KOGYO KABUSHIKI KAISHA, Nagoya-shi, Aichi-ken (JP); MAX CO., LTD., Chuo-ku Tokyo (JP)
(72) Inventor: Hirata, Koichi, c/o Brother Kogyo K.K., Nagoya-shi, Aichi-ken (JP); Ishida, Minako, c/o Brother Kogyo K.K., Nagoya-shi, Aichi-ken (JP); Ishida, Kazuko, c/o Brother Kogyo K.K., Nagoya-shi, Aichi-ken (JP); Nishio, Mayumi, c/o Brother Kogyo K.K., Nagoya-shi, Aichi-ken (JP); Hashimoto, Masahiko, c/o Max Co., Ltd., Chuo-ku, Tokyo (JP); Tahara, Shosaku, c/o Max Co., Ltd., Chuo-ku, Tokyo (JP)
(74) Representative: Prüfer, Lutz H., Dipl.-Phys.

(57) **Abstract**

When the layout image display key is depressed, a layout image of the inputted text data is displayed. It is possible to move a block cursor BK across the layout image and select any line among a plurality of lines of the text data. For example, when the block cursor BK is displayed on the second line in a block two, and if a cursor up move key is depressed, the block cursor BK is moved to the first line in the block two which is directly above the second line in the block two. If a line format setting key is depressed at this stage, settings of the line format for the first line of the block two are displayed together with a block cursor. Through operating cursor move keys, any setting item of the line format can be changed into a desired value.

## Description

### BACKGROUND OF THE INVENTION

### 1. Field of the Invention

The present invention relates to a text processing device for processing an inputted text and for outputting the processed text data.

### 2. Description of the Related Art

United States Patent No. 5,253,581 has proposed a stamp system to be used in place of a rubber stamp for printing a character array of a company name, address, and various other information. The stamp system includes a stamp assembly and a thermal perforating device. The stamp assembly includes: a grip portion; a body case; a supply reel and a take-up reel for supplying and winding up a tape-like, heat-sensitive stencil paper; and an ink pad provided in contact with the heat-sensitive stencil paper. The thermal perforating device is for perforating a print face portion, of the stamp assembly, constructed from the heat-sensitive stencil paper. The thermal perforating device includes: a perforation mount portion in which the stamp assembly is detachably mounted; a feed mechanism for feeding the heat-sensitive stencil paper mounted in the stamp assembly; a thermal head for perforating the heat-sensitive stencil paper; a keyboard for inputting characters; and a control unit for controlling the feed mechanism and the thermal head to perforate the inputted character array in the heat-sensitive stencil paper. After the inputted character array is perforated on the print face portion of the stamp assembly, ink is supplied to the print face portion from the ink pad. The stamp assembly can therefore print the inputted character array many times.

### SUMMARY OF THE INVENTION

European Patent Application Publication No. 0 655 343 A1 has further proposed an improved stamp assembly for the aforementioned stamp system. This improved stamp assembly includes a grip portion and a stamp member fixed to the lower end of the grip portion. The stamp member has a print face portion at its underside portion. The print face portion is comprised of: an impregnation member impregnated with ink; and a heat-sensitive stencil paper fixedly covering the surface of the ink impregnated member.

Japanese Patent Application (Kokai) No.HEI-5-177905 has proposed a tape printing device for making various labels, such as tape-shaped labels for adhering to the spines of account books and name tags. The tape printing device includes a keyboard for inputting characters, a display, a printing mechanism for printing the characters on a tape medium, and a control unit for controlling these elements.

Both the above-described thermal perforating device and the tape printing device manage the input data for the character array and output the input data. In other words, they serve as a kind of text processing device, similar to a word processor, an electric typewriter, and the like, for processing inputted characters and for outputting the processed characters.

Generally, these text processing devices are provided with not only a text input displaying function but also a layout image displaying function. The text input displaying function is for displaying inputted characters for ease of inputting operation. The layout image displaying function is for displaying the layout image of the text data, i.e., an image of the condition how the inputted characters are to be outputted.

According to the layout image displaying function, the text processing device displays the layout image of the outputting condition based on a format preset in the device. The layout image is simply constructed from black rectangular marks arranged in positions in correspondence with the positions at which each of the characters constituting the text data will be outputted according to the preset format.

When several lines of characters are inputted as text data, for example, the layout image of the text data will be constructed from several lines each being comprised of rectangular black marks arranged at the outputting positions. Assume now that a user observes the layout image and desires to change a format, such as a character size and a character enhancement, for a certain line of that text. In this case, the user has to switch the layout display mode into the text input mode. Then, the user operates the keyboard to move a cursor to the line desired to be revised and to change the format for the line. Afterward, the user has to return the mode to the layout display mode to confirm the changed layout image. These mode switching operations are very troublesome, lowering the operation efficiency of the text processing device.

It is therefore an objective of the present invention to solve the above-described problem and to provide an improved text processing device which can select any desired part, such as a line, of the text data even while the layout image of the text data is being displayed.

It is another objective of the present invention to provide an improved text processing device making it easier to change the format data for any desired part, such as a line, of the text data.

These and other objects of the present invention will be attained by providing a text processing device for processing text and for outputting the processed text, the text processing device including: input means for inputting characters and various commands; data storing means for storing text data of the inputted characters and for storing format data indicative of a format desired to be used for outputting the inputted text data; display means capable of displaying, in a layout display mode, a layout image of the inputted characters at a format represented by the format data; display data preparing means for, during the layout display mode, receiving the text data and the format data from the data storing means, preparing display data of the layout image based on the text data and the format data, and controlling the display means to display the display data; block cursor control means for controlling the display means to display a block cursor on a part of the layout image of the text data during the layout display mode, and for controlling the position of the block cursor in response to a cursor movement command inputted from the input means; and output means for outputting the inputted text data at the format represented by the format data.

The block cursor control means preferably includes format changing means for, during the layout display mode, changing a part of the format data for the part of the text data indicated by the block cursor. The format changing means preferably includes display switch control means for controlling, in response to a format setting command inputted from the input means, the display means in the layout display mode to display the part of the format data for the part of the text data indicated by the block cursor.

The text processing device may further include mode setting means for setting the layout display mode to control the display means to display the layout image of the inputted text data and for setting a text input mode to control the display means to display the inputted text data. The text processing device may further include cursor control means for, when the mode setting means changes the mode from the layout display mode into the text input mode, receiving data relating to the position of the block cursor from the block cursor control means and controlling the display means to display a cursor for indicating a predetermined end position in the part indicated by the block cursor.

### BRIEF DESCRIPTION OF THE DRAWINGS

The above and other objects, features and advantages of the invention will become more apparent from reading the following description of the preferred embodiment taken in connection with the accompanying drawings in which:
Fig. 1 is a perspective view of a stamp system according to an embodiment of the present invention, the stamp system being comprised of a stamp assembly and a thermal perforating device;
Fig. 2 shows the state how the stamp assembly is mounted in the thermal perforating device;
Fig. 3 is a vertical cross-sectional front view of the essential components of the stamp assembly;
Fig. 4 is a block diagram of a control system for the thermal perforating device;
Fig. 5 is an explanatory diagram of preset format information stored in a program memory;
Fig. 6 is an explanatory diagram of print face layout information;
Fig. 7 is a flow chart of a text input control routine;
Fig. 8 is a flow chart of a layout image display process control routine;
Fig. 9 is a flow chart of a block cursor movement process control routine;
Fig. 10 is a diagram showing line format data and text data stored in a text memory;
Fig. 11(a) is a sample diagram of an input screen display;
Fig. 11(b) is a diagram corresponding to Fig. 11(a) after text data has been input;
Fig. 11(c) is a sample diagram of a layout image display with a block cursor;
Fig. 11(d) is a diagram corresponding to Fig. 11(c) after a block cursor movement;
Fig. 11(e) is a sample diagram of a line printing format setting screen display;
Fig. 12 is an example display of an input screen in which the cursor is displayed at the lead display position; and
Fig. 13 is a diagram showing an example of a character array printed by a stamp on a paper surface.

### DETAILED DESCRIPTION OF THE PREFERRED EMBODIMENT

A preferred embodiment of the present invention will be described while referring to the accompanying drawings wherein like parts and components are designated by the same reference numerals.

The present embodiment is a stamp system including a stamp assembly and a thermal perforating device. The stamp assembly has a print face portion comprised of an ink impregnation member and a heat-sensitive stencil paper. The thermal perforating device is provided with a thermal printing mechanism for performing a thermal printing operation to perforate a desired pattern on the stencil paper in dots. The pattern is comprised of an array of characters, such as letters, numbers, symbols, marks, and the like. The character array can be surrounded with borders and the like. The stamp assembly thus formed with the desired pattern can be used to stamp that pattern with ink supplied from the ink impregnation member.

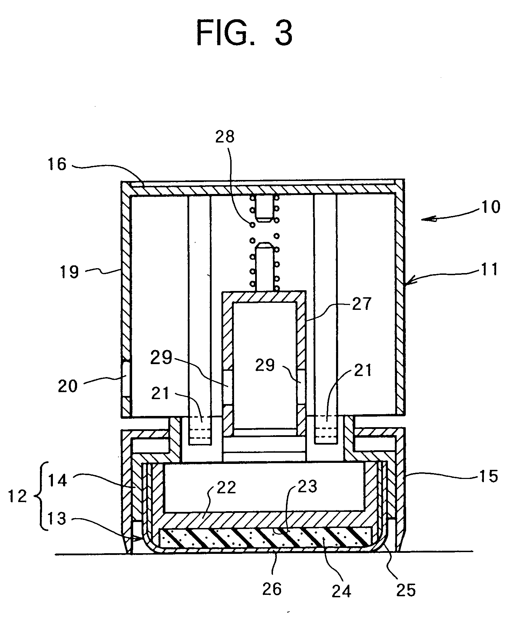

First, the stamp assembly 10 will be described. Unless otherwise noted, descriptive terms such as "upper," "lower," "left," "right," "front," and "rear" will be used to describe the stamp unit oriented in the posture in which it is normally used. More specifically, these and similar terms will be used to describe the stamp assembly 10 when oriented as shown in Fig. 3.

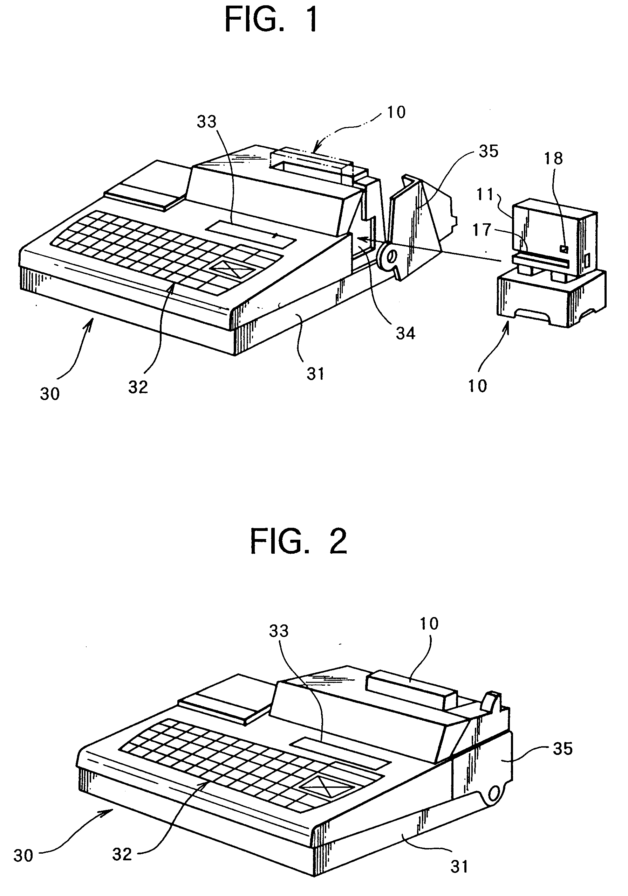

As shown in Figs. 1-3, the stamp assembly 10 includes a grip portion 11 for grasping by hand; a stamp member 12 fixed to the grip portion 11; a skirt member 15 covering the outer-peripheral side of the stamp member 12 and capable of freely moving up and down; and a protection cap (not shown) freely detachably mounted on the stamp member 12.

A recess portion 16, into which a sample printed label is adhesively attached, is formed at the top portion of the grip portion 11. A guide groove 17 is formed on the lower portion of both the front and back sides of the grip portion 11. An engaging recess 18 is formed on the front side. An engaging hole 20 is formed on the left side wall 19.

The stamp member 12 includes a stamp member body 13 and an outer-periphery holding member 14. The stamp member body 13 is fixedly inserted from the lower side of the outer-periphery holding member 14. Two pairs of engaging pawls 21 extend out from the front and rear walls of the grip portion 11. The outer-periphery holding member 14 is fixed to the grip portion 11 via the engaging pawls 21.

The stamp member body 13 includes a base member 22 provided with a shallow recess portion 23 on the lower surface thereof. An impregnation member 24 impregnated with oil-based ink is mounted on the recess portion 23. A heat-sensitive stencil paper 25 covers the lower surface of the impregnation member 24 and the outer-peripheral surface of the base member 22 and is adhesively attached to the outer peripheral surface of the base member 22.

The impregnation member 24 is made from a foam member, which is an elastic synthetic resin material, or from a non-woven fabric and is impregnated with oil-based ink to a saturated state. The heat-sensitive stencil paper 25 includes a thermoplastic film; a porous carrier; and an adhesive layer through which the thermoplastic film and porous carrier are adhesively attached to each other.

The portion of the heat-sensitive stencil paper 25 in contact with the surface of the impregnation member 24 serves as a print face portion 26. The print face portion 26 substantially covers the entire lower surface of the stamp member 12.

A spring 28, for resiliently urging the skirt member 15 downward, is mounted between a protrusion 27 at the center of the skirt member 15 and the upper wall of the grip portion 11. Engaging holes 29 are formed in the protrusion 27. The engaging holes 29 will align horizontally with the engaging hole 20 when the skirt member 15 is disposed in its uppermost position. The protection cap is freely detachably disposed so as to cover the lower end side of the stamp member body 13. The protection cap is engaged with and supported by the outer-peripheral wall portion of the skirt member 15.

In order to produce a stamp for stamping a desired pattern, a thermal head 36 in the thermal perforating device 30 is controlled to thermally print, in dots, a mirror image of the desired pattern. As a result, the heat-sensitive stencil paper 25, constituting the print face portion 26, is formed with dot pattern perforations of the mirror image. Ink can be automatically supplied to the perforations from the ink impregnation member 24. In this way, a stamp capable of printing the desired pattern is produced. That is, similarly to using an ordinary stamp having a print face portion formed of rubber, the produced stamp assembly 10 can stamp the desired pattern approximately 1,000 times, for example.

To perform the thermal print operation for perforating the heat-sensitive stencil paper 25, the stamp assembly 10, without the protection cap, is first mounted to a printing mount portion 34 of the thermal perforating device 30. A guide bar in the thermal perforating device 30 is inserted through the engaging holes 20, 29, and 29. In this way, the skirt member 15 is maintained in its uppermost position during perforation. After perforation, the stamp assembly 10 is removed from the device 30. The protection cap is then fitted to the stamp assembly 10 until the stamp assembly 10 is used for stamping operation. When stamping is performed, the protection cap is removed as shown in Fig. 3, and the skirt member 15 is positioned on the surface of a sheet at a desired stamping position, thereby positioning the print face portion 26 of the stamp member 12. Thereafter, the grip portion 11 is pressed downward to imprint the pattern.

Next, the thermal perforating device 30 will be described.

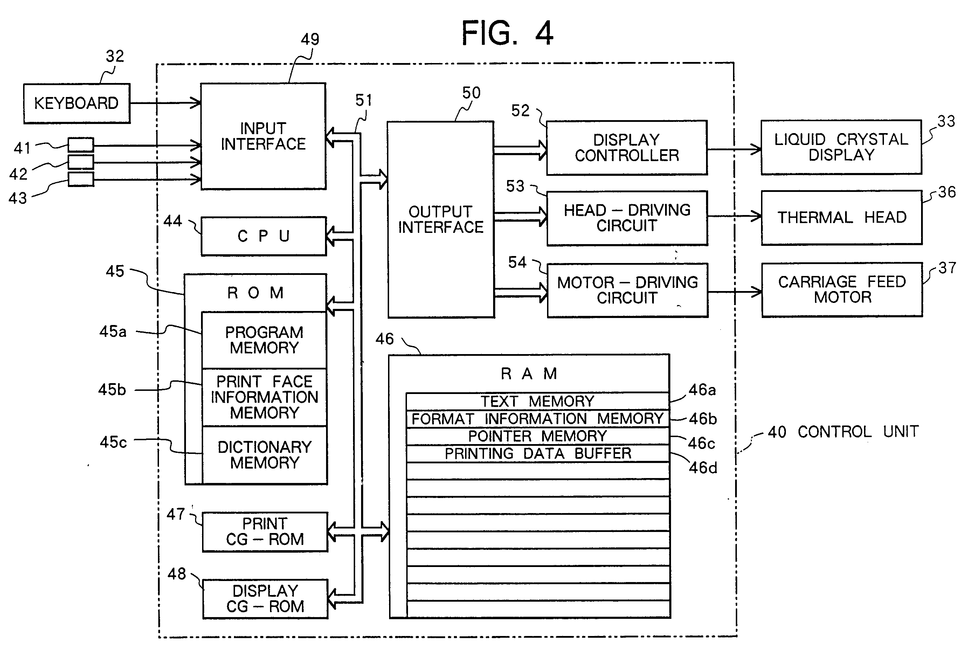

As shown in Figs. 1-2, the thermal perforating device 30 includes: a body frame 31; a keyboard 32; a liquid crystal display 33 provided at the front portion of the body frame 31; a thermal printing mechanism provided at the rear portion of the body frame 31; and a control unit 40 (shown in Fig. 4) provided to the interior of the body frame 31.

The keyboard 32 is provided with character keys, various function keys, and a main switch. The character keys include a plurality of keys for designating a plurality of letters, numbers, symbols, and the like. These character keys can be used for inputting both Japanese kana and the Roman alphabet. The function keys include: up, down, left, and right cursor move keys; a character-conversion key; a line-feed key; a vertical block-feed key; a horizontal block-feed key; an execution key; a cancel key; a delete key; a shift key; a lower-case letter switch; a letter-type selection switch; a print command key; a print face layout print key; a layout setting key; a general format setting key; a line format setting key; a character size key; an enhancement key; a format key; an insert line key; a layout display key; a delete all key; and the like.

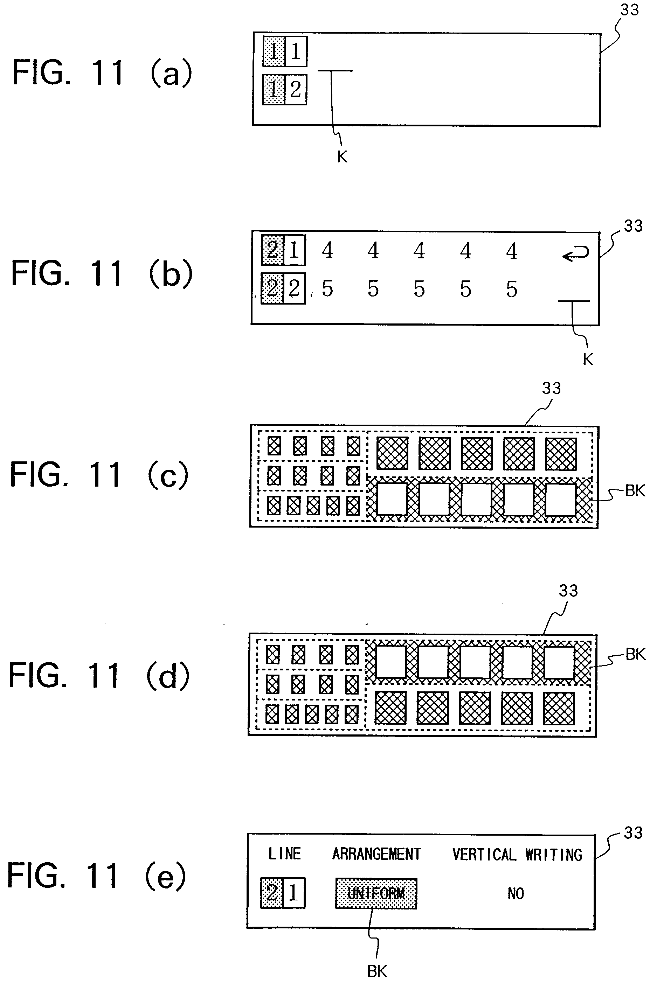

The liquid crystal display 33 is constructed to be capable of displaying two lines of a character array. The liquid crystal display 33 is used to display inputted text data in a text input mode as shown in Fig. 11(b). The liquid crystal display 33 can be used to display, on the upper line, various command messages for the user's inspection. The liquid crystal display 33 is also used to, in a layout display mode, display a layout image of a printing condition how the inputted text data will be printed or stamped as shown in Fig. 11(c).

Next, the thermal printing mechanism provided to the device 30 will be described. The thermal printing mechanism includes: the thermal head 36 shown in Fig.4; a carriage on which the thermal head 36 is mounted; and a carriage driving mechanism for driving the carriage in both directions lengthwise to the print face portion 26 to thereby move the thermal head 36 over a distance greater than the largest lengthwise part of the print face portion 26.

The thermal head 36 is similar to a thermal head employed in a thermal printer. The thermal head 36 is provided with, for example, ninety-six heating elements aligned in a row in the front and rear directions. The carriage driving mechanism drives the carriage by means of a carriage feed motor 37 shown in Fig. 4.

After opening a rotatable opening/closing cover 35, the stamp assembly 10 is inserted through the opening and into the printing mount portion 34 and is supported therein by front and rear guides. The front and rear guides engage with the pair of guide grooves 17 in the grip portion 11 of the stamp assembly 10. An engaging roller engages with the recess 18 of the grip portion 11, thereby fixing the position of the stamp assembly 10. Thermal printing operation by the thermal printing mechanism is executed with the cover 35 closed. The thermal printing mechanism is controlled to print a mirror image of the inputted text data. The heat-sensitive stencil paper 25 is therefore perforated with the mirror image of the inputted text data, whereby the stamp assembly will properly imprint the inputted text data.

It is noted that a dummy stamp assembly (not shown) can be mounted in the printing mount portion 34. The dummy stamp assembly is provided with a heat-sensitive paper at its lower surface. When the dummy stamp assembly is mounted to the portion 34, the thermal printing mechanism is controlled to print a non-mirror image of the inputted text data. The heat-sensitive paper is therefore printed with the non-mirror image of the inputted text data. Thus printed heat-sensitive paper is used as a sample printed label attached to the recess portion 16 of the stamp assembly 10.

Next, the control system of the device 30 will be described with reference to Fig. 4. The control system includes a control unit 40 which drives and controls the thermal printing mechanism and the liquid crystal display 33.

The control unit 40 is connected to: the keyboard 32; the liquid crystal display 33; the thermal head 36; the carriage feed motor 37; two contactless switches 41 and 42 for detecting the presence and type of a stamp assembly 10; and a contactless switch 43 for detecting a dummy stamp assembly.

The control unit 40 includes: a CPU 44; a ROM 45; a RAM 46; a printing CG-ROM 47; a display CG-ROM 48 for display on the display 33; an input interface 49 connected to the keyboard 32 and the contactless switches 41, 42, and 43; and an output interface 50. These elements are connected to one another through a bus 51. The control unit 40 also includes a display controller 52 for controlling the display 33, a head-driving circuit 53 for controlling the thermal head 36, and a motor-driving circuit 54 for controlling the motor 37, which are all connected to the output interface 50.

This stamp system previously stores data of a large number of standard print face layouts. A user can select a desired one of the standard print face layouts. The user can also create any desired print face layout through manipulating the line feed key, the block feed keys, and the like.

The ROM 45 is provided with: a program memory 45a for storing a control program used to control the operation of the entire thermal perforating device; a print face information memory 45b for storing data of the large number of standard print face layouts; and a dictionary memory 45c for kana/kanji conversion and the like.

The standard print face layouts are classified into several categories such as: "address with border" for printing a border line around an address and company name; "address" for printing an address and company name without a border; and "envelope address and name" for printing the postal code along with the address and name. A plurality of print face layouts are provided to each of these print face layout categories, to match the user's needs. Each print face layout is provided with its name.

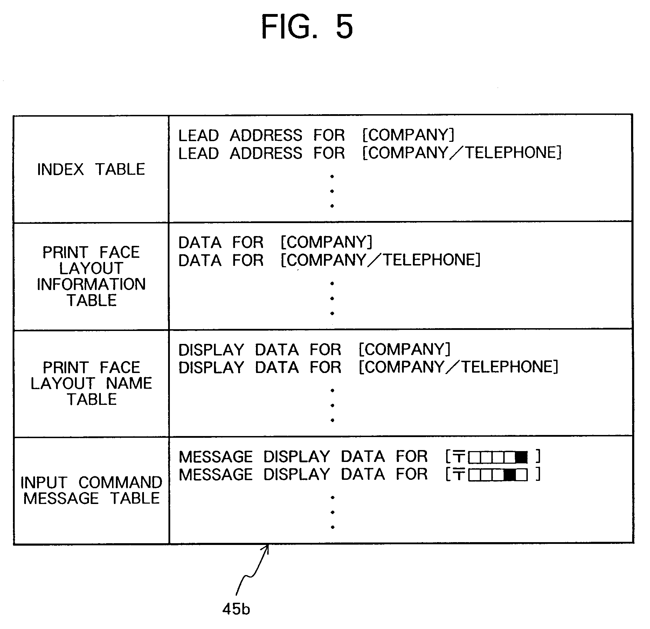

As shown in Fig. 5, the print face information memory 45b is provided with: an index table; a print face layout information table; a print face layout name table; and an input command message table. The print face layout information table stores data for each of the plurality of print face layouts. The print face layout name table stores display data for displaying the names, such as "COMPANY" and "COMPANY/TELEPHONE", of the plurality of print face layouts. The index table stores: a lead address of the data for each print face layout in the print face layout information table; and a lead address of the display data for each print face layout name in the print face layout name table. The input command message table stores display data of a plurality of input command messages provided to each print face layout.

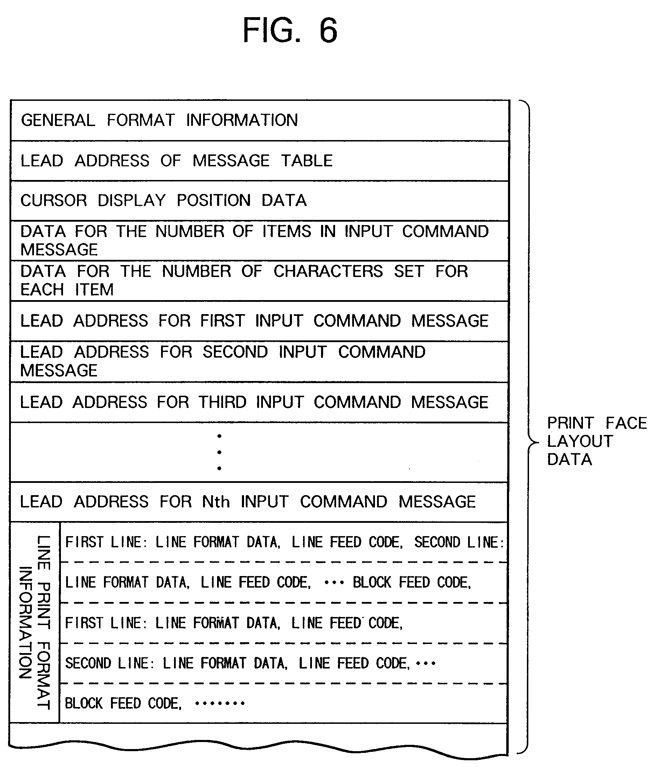

Fig. 6 shows one set of data for each print face layout stored in the print face layout information table. The set of print face layout data includes: general format information relating to printing of the print face layout; a lead address of the message table; cursor display position data; data for the number of items in the input command messages and data for the number of characters inputtable for each item; and lead addresses for the corresponding input command messages stored in the input command message table. The set of print face layout data further includes line print format information for printing inputted text data at the corresponding print face layout. The line print format information is constructed from several sets of line print format data, each set of line print format data being separated by line-feed codes and block-feed codes for printing each line in every block. Each set of line print format data includes data of various setting items, such as a character size, a character enhancement, and a character height, of the corresponding line.

The RAM 46 is provided with: a text memory 46a; a format information memory 46b; a pointer memory 46c; a printing data buffer 46d; and various other memories, counter memories, registers, and the like. The text memory 46a is for temporarily storing inputted text data together with the line print format data for the lines of the text. The format information memory 46b is for temporarily storing general format information for a print face layout selected or newly created for the inputted text data. The pointer memory 46c is for temporarily storing the values of a block pointer BP, a line pointer LP, and a cursor pointer KP. The printing data buffer 46d is for temporarily storing dot pattern data for printing the inputted text with the selected or created print face layout.

The printing CG-ROM 47 previously stores printing dot pattern data of many printable characters, such as letters, numbers, symbols, and the like, in correspondence with their code data. The display CG-ROM 48 previously stores display dot pattern data for those characters in correspondence with their code data. The display CG-ROM 48 also stores display dot pattern data for other various symbols, marks, and the like for display in correspondence with their code data.

With the above-described structure, the device 30 can perform a thermal printing operation to perforate a desired character array in the print face portion 26 of the stamp assembly 10 and make a stamp assembly 10 usable as a stamp for stamping that character array.

In order to control the device 30 to perform this operation, the user first selects a size of his/her desired stamp face. The user inputs his/her desired character array while newly creating his/her desired print face layout. Or, the user selects one standard print face layout, and inputs his/her desired character array. The device 30 performs a text processing operation to process the inputted character array with a format of the selected stamp face size and of the selected or created print face layout. After completing these text processing operations, when the user depresses the print command key, the control unit 40 produces printing dot pattern data for a mirror image of the inputted character array. The control unit 40 temporarily stores the printing dot pattern data. The control unit 40 also produces and stores printing dot pattern data for a non-mirror image of the inputted character array. When the user mounts a dummy stamp assembly in the printing mount portion 34, the control unit 40 controls the thermal head 36 and the carriage feed motor 37 to print the non-mirror image onto the heat-sensitive paper on the dummy stamp assembly. After verifying that the inputted character array is properly printed on the dummy stamp, the user mounts the stamp assembly 10 in the printing mount portion 34, whereupon the control unit 40 controls the thermal head 36 and the carriage feed motor 37 to print the mirror image of the inputted character array. As a result, the heat-sensitive paper 26 is perforated with the mirror image of the inputted character array. Ink in the impregnation member 24 will seep out through the perforations, thereby allowing the character array to be imprinted over many times in the same way as an ordinary rubber stamp.

The text processing operation attained by the control unit 40 will be briefly described below.

When the user turns on the device 30, the device 30 is automatically brought into a text input mode. The user then starts manipulating the keyboard 32 while observing the display 33. The user first selects a print face size of his/her desired stamp. Afterward, the display 33 starts displaying a text input screen. The text input screen is composed of two, upper and lower, display lines as shown in Fig. 11(a). When desiring to newly create a print face layout, the user inputs his/her desired characters while manipulating the line feed key and the block feed keys, thereby creating a new print face layout in which the inputted character array is arranged. Two lines of the character array are displayed as shown in Fig. 11(b), for example. On the other hand, when the user desires to use one of the standard print face layouts, the user manipulates the layout setting key and selects one standard print face layout. Input command messages for the selected print face layout are displayed on the upper display line. The user inputs his/her desired characters in accordance with the command messages. One line of the inputted character array is displayed on the lower display line.

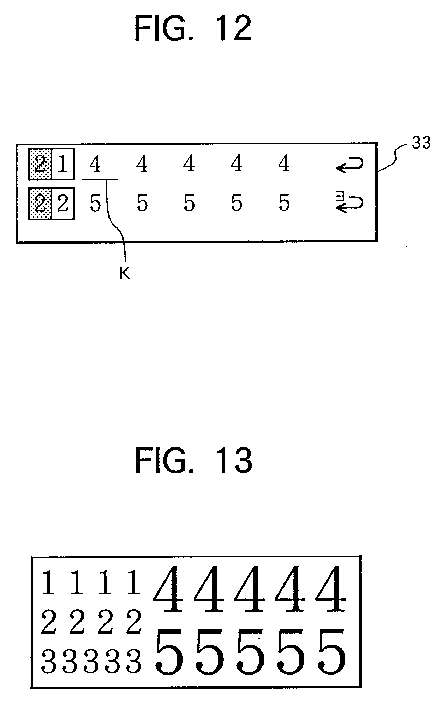

When the user depresses the layout display key, the display 33 switches to display a layout image of the printing condition how the inputted character array will be printed, as shown in Fig. 11(c), for example. By manipulating the cursor move keys, the user can designate any line of the inputted character array with a block cursor BK as shown in Fig. 11(d), for example. When desiring to change line print format data for a certain line of the inputted character array, the user designates that line by the block cursor BK and then depresses the format setting key. As a result, the display switches into a format setting screen as shown in Fig. 11(e), for example, that displays several setting items of the line print format data for that line. By manipulating the cursor move keys, the user can change his/her desired setting items of the line print format data. After that, the display returns to the text input mode where a cursor is automatically displayed at a lead end of that line as shown in Fig. 12.

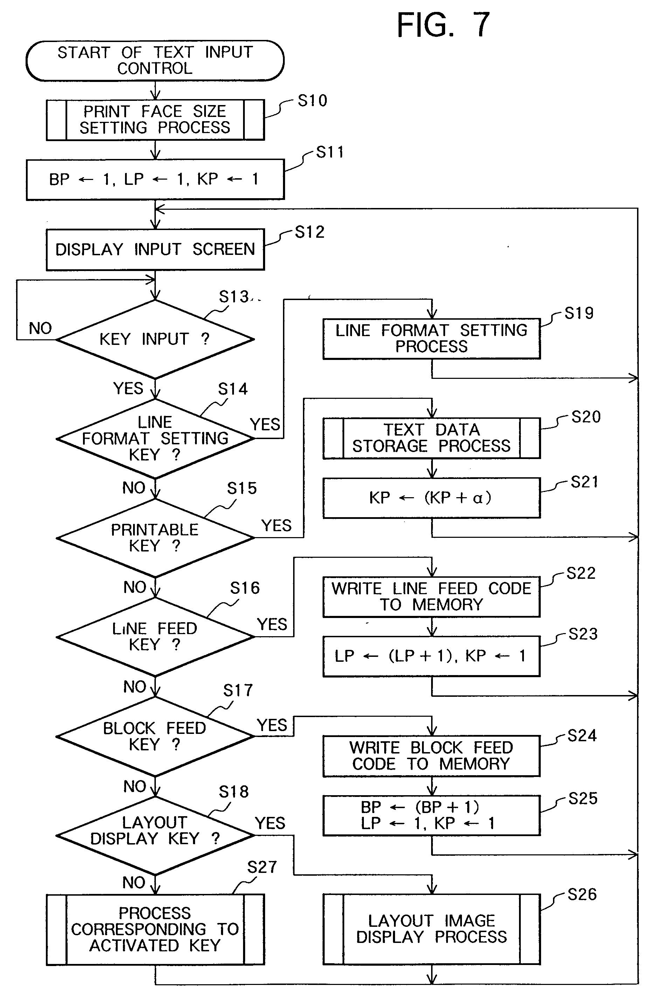

Next, a text input control routine, executed by the control unit 40 in the text input mode, will be described in greater detail with reference to the flow charts in Figs. 7 - 9. The symbols Si (i = 10, 11, . . .) used in the Figs. indicate each step.

When the user activates the main switch on the keyboard 32, the device is powered and automatically set to the text input mode. Default values are set for the line print format data and stored in the memory 46a. Similarly, default values are set for the general format information and stored in the memory 46b. Then, the control process of Fig. 7 starts.

First, a print face size setting process is executed (S10). In this process, four sizes of print face portions 26 of a stamp assembly 10 are provided as candidates. The user can select a desired one of these four. Next, the block pointer BP, the line pointer LP, and the cursor pointer KP are all initialized to the value "1" (S11). The input screen is then displayed in S12 on the display 33 for inputting text based on the values of these pointers. As shown in Fig. 11(a), a text data input space for the first line is provided on the upper display line of the display 33. A text data input space for the second line is provided in the lower display line. Further, at the lead display position of each display line, a reverse image of the block number and, to the right of it, an image of the line number are displayed. In addition, a cursor K is displayed at the lead position of the data input space on the first line.

When the user desires to create a new print face layout, the user generally performs a line print format setting operation and manipulates the printable keys, the line feed key, and the block feed keys.

That is, when the user depresses the line format setting key (S13 and S14 are yes), the line print format setting process is executed (S19). During this process, the user sets his/her desired values for the respective setting items of the line print format. The newly set data are written over the default values of the line print format data now set in the text memory 46a. It is noted that when the user does not set values for certain setting items, the presently-set default values are set as it is. When the line printing format setting process is completed, control returns to S13 via S12.

When the user depresses a printable key such as a character key or a character-conversion key (S13 is yes, S14 is no, and S15 is yes), code data corresponding to the depressed character or to a converted symbol or mark is stored in a memory location of the text memory 46a corresponding to a display position indicated by the cursor K (S20). The cursor pointer KP is then incremented (S21), the character is displayed (S12), and control returns to S13.

When the user depresses the line feed key to indicate completion of text data input for one line (S13 is yes, S14 and S15 are no, and S16 is yes), a line feed code is written to the text memory 46a (S22). In addition, the line pointer LP is incremented by one, and the cursor pointer KP is initialized to "1." Then, control returns to S13 via S12.

When the user depresses a block feed key, either the horizontal block-feed key or the vertical block-feed key, to finish the current block (S13 is yes, S14-S16 are no, and S17 is yes), a block feed code is written to the text memory 46a (S24). Further, the block pointer BP is incremented one, and the line pointer LP and cursor pointer KP are initialized to "1" (S25). Then control returns to S13 via S12.

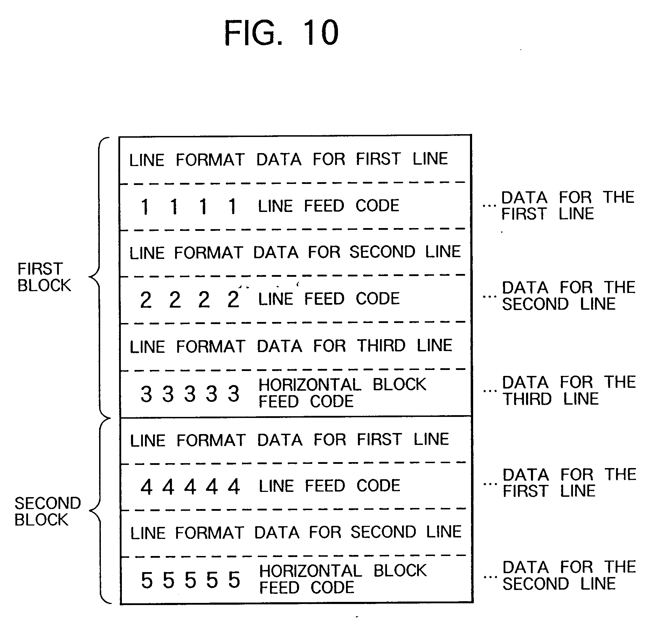

Assume now that the first block is entered with data "1, 1, 1, 1, line feed code" on the first line; "2, 2, 2, 2, line feed code" on the second line; and "3, 3, 3, 3, 3, horizontal block feed code" on the third line. Further, the second block is entered with data "4, 4, 4, 4, 4, line feed code" on the first line; and "5, 5, 5, 5, 5, horizontal block feed code" on the second line. At this time, the data for these five lines are stored together with the line print format data in the text memory 46a as shown in Fig. 10. The last two lines of text data appear in the display 33 as shown in Fig. 11(b).

On the other hand, when the user desires to use one standard print face layout, the user manipulates the layout setting key at the initial stage when the display 33 displays the text input screen of Fig. 11(a). The control therefore proceeds to S27 where a layout setting process is performed. During this process, the user inputs his/her desired print face layout name. As a result, the general format information and the line print format information for the selected print face layout are retrieved from the memory 45b, and written over the default values in the memories 46b and 46a, respectively. Then, the process returns to S12 where input command messages for the selected print face layout are retrieved from the memory 45b and displayed on the upper display line. The user manipulates the printable keys, the line feed key, and the block feed keys in S15 - S17 in accordance with the command messages displayed on the upper display line. Code data of the inputted keys are therefore stored in the memory 46a in S20 - S25 together with the already-set line print format data of the selected print face layout. The inputted characters are thus arranged at the selected print face layout. The last one line of the inputted character array is displayed on the lower display line.

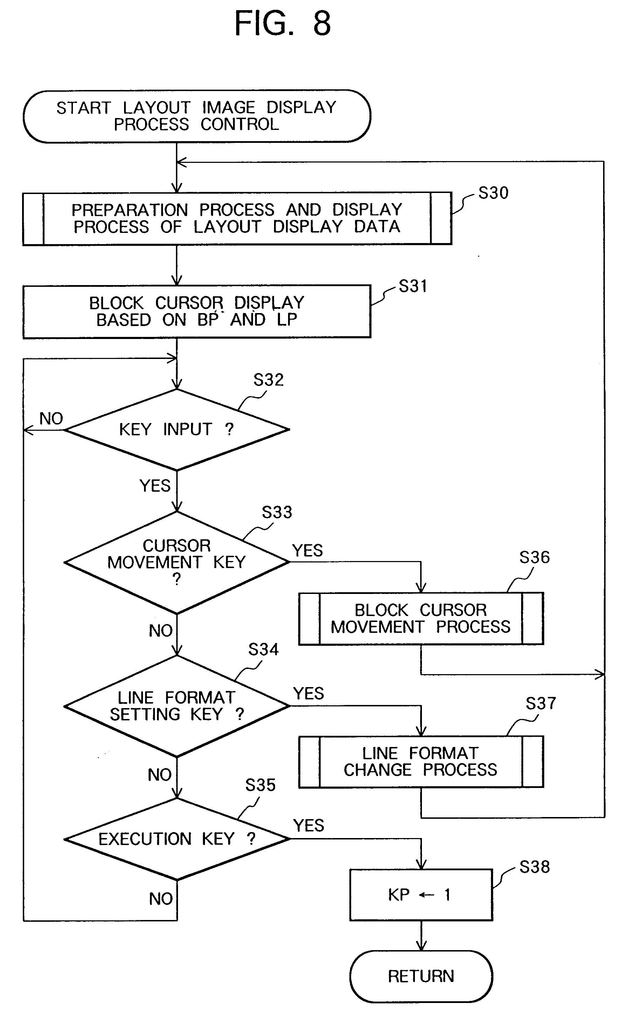

Then, when the user depresses the layout display key to display the layout image of the inputted text data (S13 is yes, S14 - S17 are no, and S18 is yes), the layout display mode is set, and a layout image display process control shown in Fig. 8 is executed (S26).

When this control is started, first the processes are executed in S30 for preparing layout display data and for displaying the layout image. During these processes, the control unit 40 produces layout display data, constructed from dot data for display of a layout image of the inputted text, based on the general format data, stored in the memory 46b, and on the line print format data and text data, stored in the text memory 46a. Thus produced dot pattern data is displayed on the display 33 so as to indicate the inputted text together with outlines surrounding the respective blocks and separation lines separating the respective lines. It is noted that the dot pattern data indicates the positions of the inputted characters by black rectangles, each being surrounded by white areas, as shown in Fig. 11(c).

Next, in S31, based on the present values of the block pointer BP and the line pointer LP, the dot data for the line indicated by the pointers BP and LP is converted into opposite image dot data representative of a block cursor BK. The opposite image dot data is for indicating the positions of the inputted characters by white rectangles, each being surrounded by black areas, as also shown in Fig. 11(c).

Thus, as shown in Fig. 11(c), a layout image of the inputted text data appear in the display 33 together with the preset lines of the print face portion. In this example, the layout image of the inputted text data is constructed from: a block one composed of three lines; and a block two composed of two lines. Based on the present values of the block pointer BP and the line pointer LP, both of which are "2," opposite image dot data is displayed at the second line of the second block to display the block cursor BK.

When the user depresses any of the up, down, left, and right cursor movement keys (S32 and S33 are yes), a block cursor movement process control is executed (S36) to move the block cursor BK in the designated direction.

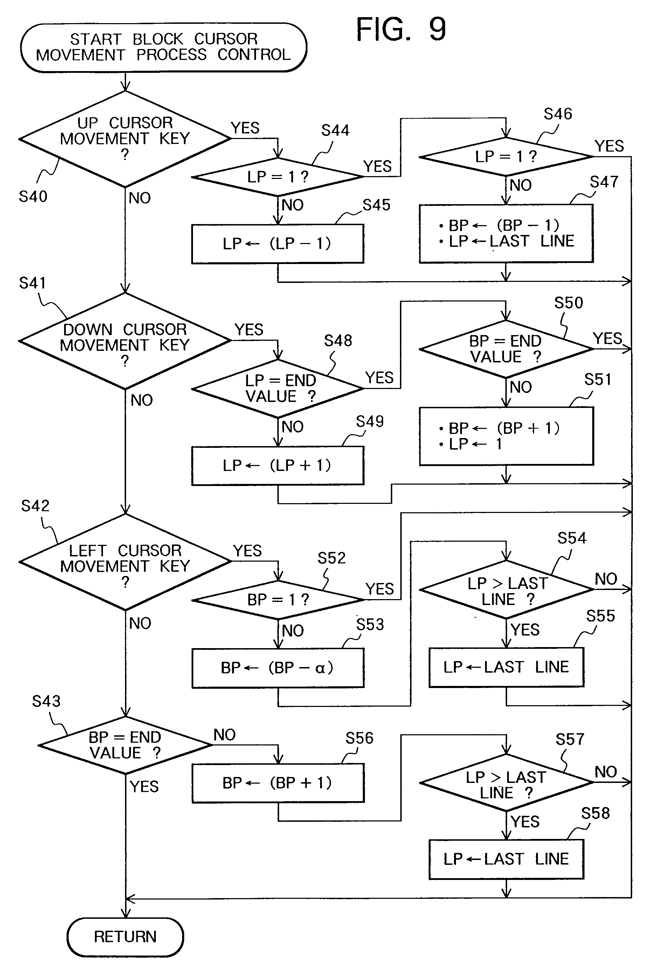

During the block cursor movement process control, as shown in Fig. 9, when the up cursor movement key is pressed (S40 is yes), and when the values of the line pointer LP and the block pointer BP are both "1" (S44 and S46 are yes), the block cursor BK cannot be moved up. Therefore, this control is terminated, and the control returns to S30 of the layout image display process. On the other hand, when the value of the line pointer LP is not "1" (S44 is no), the line pointer LP is decremented by one (S45). Also, if the value of the line pointer LP is "1," but the value of the block pointer BP is not "1" (S44 is yes and S46 is no), then the block pointer BP is decremented by one and the line pointer LP is set to the last line of a previous block (S47), and control returns to S30.

When the down cursor movement key is pressed (S40 is no and S41 is yes), and when both the line pointer LP and the block pointer BP are set to their end values (S48 and S50 are yes), the block cursor BK cannot be moved down. Therefore, control is returned to S30. On the other hand, if the value of the line pointer LP is not set at its end value (S48 is no), the line pointer LP is incremented one (S49). Also, if the value of the line pointer LP is its end value but the value of the block pointer is not its end value (S48 is yes and S50 is no), then the block pointer BP is incremented one and the line pointer LP is set to the initial value "1" (S51), and control returns to S30.

When the left cursor movement key is pressed (S40 and S41 are no and S42 is yes), and when the value of the block pointer BP is "1," meaning the lead block (S52 is yes), the block cursor BK cannot be moved to the left. Therefore, control is returned to S30. On the other hand, when the value of the block pointer BP is not "1" and a block exists to the left of the current block (S52 is no), then the block pointer BP is decremented by one (S53). If the value of the line pointer LP is greater than the last line of the block to the left (S54 is yes), then the line pointer LP is set to the last line of the block on the left (S55). Control is then returned to S30. On the other hand, if the value of the line pointer LP is less than or equal to the last line of the block to the left (S54 is no), then the line pointer LP is not changed, and control returns to S30.

When the right cursor movement key is pressed (S40-S42 are no), and when the value of the block pointer BP is its end value, meaning the last block (S43 is yes), then the block cursor BK cannot be moved to the right. Therefore, control is returned to S30. On the other hand, when the value of the block pointer BP is not its end value and a block exists to the right of the current block (S43 is no), then the block pointer BP is incremented one (S56). Further, if the value of the line pointer LP is greater than the last line of the block to the right (S57 is yes), then the line pointer LP is set to the last line of the block on the right (S58). Control is then returned to S30. On the other hand, if the value of the line pointer LP is less than or equal to the last line of the block to the right (S57 is no), then the line pointer LP is not changed, and control returns to S30.

For example, when the block cursor BK appears at the second line of block two as shown in Fig. 11(c), if the up cursor movement key is depressed, the block cursor BK is moved, according to the block cursor movement process control and S30 and S31 of the layout image display process control, to the line directly above, i.e., to the first line of the second block as shown in Fig. 11(d).

When the user desires to change the line print format data for a certain line of the text, the user moves the block cursor BK to that certain line in the above-described manner. Then, the user depresses the line format setting key.

When the line format setting key is thus depressed during the layout image display process control (S32 is yes, S33 is no, and S34 is yes), the line print format data presently set for that line are displayed in the display 33, and a line print format changing process is executed (S37). During this process, the values of any setting items can be changed through simply operating the cursor movement keys. Control then returns to S30 and S31, where the layout image is displayed at the newly changed format.

Now assume that the line format setting key is depressed when the block cursor BK appears in the first line of the second block as shown in Fig. 11(d). As a result, the line print format data for the first line of the second block is partly displayed along with the block cursor as shown in Fig.11(e). In this example, three setting items of the line print format data are displayed. By operating the left and right cursor movement keys, the block cursor can be moved to display other setting items. By operating the up and down cursor movement keys, the value of a setting item at the position of the block cursor BK can be changed.

After confirming the format-changed layout image, the operator depresses the execution key. When the execution key is thus depressed (S32 is yes, S33 and S34 are no, and S35 is yes), the cursor pointer KP is initialized to "1." The layout image mode is terminated, and the text input mode is set. That is, control returns to S12 of the text input control.

At this time, the display 33 displays, in either the upper or lower display line, the text data at the block and line indicated by the presently set values of the block pointer BP and the line pointer LP. In addition, the cursor K is displayed at a lead position of that line.

In the example where the execution key is pressed when the values of the block pointer BP and the line pointer LP are "2" and "1," respectively as shown in Fig. 11(d), the text data for the first line of the block two is displayed in the upper display line of the display 33 as shown in Fig. 12. The cursor K is displayed at the lead end of that display line.

Further, when the user depresses any key except the format setting key, the printable key, the line feed key, the block feed key, and the layout display key (S13 is yes and S14 - S18 are no), the process corresponding to the depressed key is executed (S27) and control returns to S12.

Assume now that line format data and text data are stored as shown in Fig. 10. If the print command key is depressed when the dummy stamp assembly is mounted to the device 30, a non-mirror image of the character array of that text data will be printed on the heat-sensitive paper of the dummy stamp assembly. In other words, an image of Fig. 13 will be printed on the paper. The paper will be attached to the top surface 16 of the stamp assembly 10 as a label. On the other hand, if the print key is depressed when the stamp assembly 10 is mounted to the device 30, a mirror image of the character array of that text data will be printed or perforated on the print face portion 26. The stamp assembly 10 can then be used to print the image of Fig. 13 on a paper surface.

As described above, when the layout display key is depressed, a layout image of the inputted text data is displayed. It is possible to move a block cursor BK across the layout image and select any line among a plurality of lines constituting the text data. For example, when the block cursor BK is displayed on the second line in a block two, and if a cursor move up key is depressed, the block cursor BK is moved to the first line in the block two which is directly above the second line in the block two. If a line format setting key is depressed at this stage, settings of the line format for the first line of the block two are displayed together with a block cursor. Through operating cursor move keys, any setting item of the line format can be changed into a desired value.

Thus, according to the thermal perforating mechanism 30 described above for use with the stamp assembly 10, during the layout display mode, any line of text can be selected by operating the cursor movement keys to move the block cursor BK. The printing format data of the line indicated by the block cursor BK can easily be changed without switching the display back to the text input mode.

When terminating the layout display mode and returning to the text input mode, the cursor K is automatically displayed at the lead end position of the text line indicated by the block cursor BK according to the presently-set values of the block pointer BP and the line pointer LP. In this way, cursor movement operations can be eliminated, and the cursor display position becomes clear, making it possible to speed up editing or processing works of text data and printing format data.

While the invention has been described in detail with reference to the specific embodiment thereof, it would be apparent to those skilled in the art that various changes and modifications may be made therein without departing from the spirit of the invention.

The present invention can be applied to various text processing devices, such as a label printing device provided with a keyboard, a printing mechanism, a display, and the like.

As described above, according to the text processing device of the present invention, when the layout display mode is set to display the layout image of the printing condition of the inputted text data, the text processing device prepares display data for the layout image based on the text data and the printing format data. The device then displays the display data. In the layout display mode, one block cursor is displayed to indicate one part, such as one line, of text data. The block cursor can be controlled, in response to cursor movement commands, to move to specify text parts desired to be revised or changed. Accordingly, any part of text can be indicated by the block cursor. By moving the block cursor, a part of text desired to be revised or changed can be easily selected.

During the layout display mode, when receiving format setting commands, a part of the printing format data, only for the part indicated by the block cursor, is selected from the entire printing format data for the entire text data, and displayed. Therefore, the printing format data for the part indicated by the block cursor can easily be changed without switching to the text input mode.

When the layout display mode is canceled and returned to the text input mode, based on data regarding the position of the block cursor, a cursor used for inputting commands is displayed at the lead position of the part indicated by the block cursor. Therefore, cursor movement operations can be eliminated. In addition, the cursor display position becomes clear, making it possible to speed up editing works of text data and printing format data.

## Claims

1. A text processing device for processing text and for outputting the processed text, the text processing device including:
input means for inputting characters and various commands;
data storing means for storing text data of the inputted characters and for storing format data indicative of a format desired to be used for outputting the inputted text data;
display means capable of displaying, in a layout display mode, a layout image of the inputted characters at a format represented by the format data; and
display data preparing means for, during the layout display mode, receiving the text data and the format data from the data storing means, preparing display data of the layout image based on the text data and the format data, and controlling the display means to display the display data.

2. A text processing device as claimed in claim 1, further comprising
block cursor control means for controlling the display means to display a block cursor on a part of the layout image of the text data during the layout display mode, and for controlling the position of the block cursor in response to a cursor movement command inputted from the input means; and
output means for outputting the inputted text data at the format represented by the format data.

3. A text processing device as claimed in claim 2, wherein the text data indicates at least one line of characters, the block cursor control means controlling the display means to display a block cursor on one of the at least one line of the layout image of the text data and controlling the position of the block cursor in response to the cursor movement command from the input means.

4. A text processing device as claimed in claim 2 or 3, wherein the block cursor control means includes format changing means for, during the layout display mode, changing a part of the format data for the line of the text data indicated by the block cursor.

5. A text processing device as claimed in claim 4, wherein the format changing means includes display switch control means for controlling, in response to a format setting command inputted from the input means, the display means in the layout display mode to display the part of the format data for the line or part of the text data indicated by the block cursor.

6. A text processing device as claimed in one of claims 1 to 5,
further comprising mode setting means for setting the layout display mode to control the display means to display the layout image of the inputted text data and for setting a text input mode to control the display means to display the inputted text data.

7. A text processing device as claimed in claim 6, further comprising cursor control means for, when the mode setting means changes the mode from the layout display mode into the text input mode, receiving data relating to the position of the block cursor from the block cursor control means and controlling the display means to display a cursor for indicating an end position of the line or part indicated by the block cursor.

8. A text processing device as claimed in one of claims 1 to 7,
wherein the output means includes printing means for printing the text data at the format, preferably thermal printing means for thermally printing the text data at the format.

9. A text processing device as claimed in claim 8, wherein the thermal printing means thermally perforates a heat-sensitive stencil paper of a stamp unit in accordance with the text data and the format data.
